# EUROPEAN PATENT APPLICATION

(11) **EP 2 273 245 A2**
(43) Date of publication of application: **12.01.2011**
(21) Application number: 10386011.0
(22) Date of filing: 06.07.2010
(51) Int. Cl.: G01K 5/48

(54) **Method for the detection of harmful changes in storage temperature of sensitive products, e.g. refrigerated or frozen food, using a shape memory alloy**

(30) Priority: 07.07.2009 GR 20090100383
(71) Applicant: MPRECHAS, Lucas, Loannina (GR); TSOMOKOS, Loannis, P.C. 452-21 Loannina (GR); POLIMEROS, Alechandros, P.C. 453-33 Loannina (GR)
(72) Inventor: Mprechas, Lucas, 453-33 Ioannina (GR); Polimeros, Alechandros, 453-33 Ioannina (GR); Tsomokos, Ioannis, 452-21 Ioannina (GR); Triantafilou, Panagiotis, 450-00 Ioannina (GR); Georgatis, Emanouil, 450-00 Ioannina (GR)

(57) **Abstract**

The present method refers to the development of attachments to be incorporated inside the product bulk, such as food products, for the effective continuous detection and recording of temperature changes that denote faulty maintenance conditions during the storage of the product, its transport and distribution.

Both detection and recording of specific temperature changes are effected with this method based on the change of shape of the so-called "Shape Memory Alloys" (SMA). The latter, change their shape in specific ways in response to temperature changes outside a predefined range, while when coated with other materials, such as plastic polymers or TiO₂, they change their colour after their geometric state -e.g. contraction or dilation- has been transformed.

Their cost is very low compared with the products that their safe maintenance is detected and recorded and no external power source is required, so that they can be directly attached to the product, closely monitoring its actual life-long maintenance temperatures.

## Description

The method described herein, regards the development of an attachment to be placed within the bulk or inside the packaging of heat-sensitive products, accompanying them from production to use, detecting and recording any temperature changes that could possibly have harmful effects on the function or suitability of these products for their specified use.

There has not been any previous technique applicable to sensitive products, for instance food, biological substances, individually to each item, allowing through simple visual inspection the detection of appropriate maintenance during all stages of transportation, storage, distribution and disposal. This inability to control and guarantee the conditions of maintenance of a standardized product throughout its lifetime is an obvious disadvantage.

The method of detecting harmful temperature changes in heat-sensitive products, is based on materials that exhibit temperature-dependent changes in their qualities and behaviour, such as their geometry (e.g. shape), physical properties (e.g. colour) or their state (solid, liquid or gas).

Techniques based on the geometric behaviour of materials employing SMAs.

This method is based on the use of one or more memory metal alloys, known as Shape Memory Alloys (SMA), that exhibit temperature-dependent changes in their geometric behaviour (e.g. shape) or on the mechanical intervention of these alloys on other materials that exhibit changes in their physical behaviour (e.g. colour) when their geometric status is altered, e.g. contraction - dilatation.

### a) SMAs have the capacity of different physical and geometric behaviour above and below specific temperatures.

The physical behaviour is defined as crystalline above and amorphous below the temperature that this change is observed and this temperature is called the transition temperature (Tₘ). It is usually located in the middle between a temperature characterizing the amorphous behaviour of the material (Tᵢ) and a temperature characteristic of the crystalline behaviour (Tₕ). The transition temperature of memory metals is determined by the proportions of the alloy metals with a precision from 20°C to 2°C.

The geometric behaviour is characterized as uni- or bi-directional, depending on the alloy composition.

Unidirectional geometric behaviour. It is possible to store a geometric form at temperatures above the transition temperature (Tm). Following an intense deformation of the previous geometric form, the material stays in the deformed stated as long as the ambient temperature (Ti) is less than the transition temperature (Tm). If the ambient temperature rises above the transition temperature, the material starts a process of restoring the memorized shape. If the ambient temperature drops below the range of crystal line structure temperatures (Th) to temperatures of the amorphous state (Ti), the material does not return to its previous geometric state.

For example, setting the transition temperature to -18 °C as the maximum freezing temperature or 5 °C as the maximum cooling temperature to a single direction memory metal alloy, this may have a shape A to exhibit normal food maintenance conditions, as long as ambient temperatures have been less than the transition temperature. If the ambient temperature rises above the transition temperature it acquires a shape B, which is permanent and will not change any further any geometric properties with temperature changes. Therefore, the alloy will always exhibit the faulty maintenance conditions preserving form B.

Bidirectional geometric behaviour. It is possible to store two different shapes, one at temperatures below the transition temperature (Tm) and one at temperatures above Tm. The alloy alternates between the two shapes continuously during the transition back and forth from temperarures Ti to Th.

Setting the transition temperature for example to -18 °C as the maximum freezing temperature or 5 °C as the maximum cooling temperature to a bidirectional metal alloy, this may have a shape A in conditions below the transition temperature and a shape B in temperatures above Tm, so that it is capable, for example, to stretch and break a fiber. So, the broken fiber is a visual indicator to the harmful temperature changes that have taken place in the alloy and, subsequently, to the material this applies.

SMA plates can be placed folded or open, so that they unfold or re-fold in temperatures that are inappropriate for the maintenance, depicting forms indicative of the maintenance conditions (acceptable or not).

We may set the transition temperature, for example to -18 °C as the maximum freezing temperature or 5 °C as the maximum cooling temperature to unidirectional memory metal alloy plate that is folded so that in appropriate maintenance conditions it displays a printed image indicative of the proper maintenance. Applying temperatures above the maintenance range, forces the SMA plate to unfold and display another printed form indicative of improper maintenance conditions, at some time point, of the product the SMA is applied on.

Technique based on the geometric behaviour of materials with the use of SMAs and materials that change their physical properties, colour or colours, during stretching (use of plastic polymer materials and coatings with TiO₂).

### Polymer materials

All polymer materials are constituted of long chains of the same basic chemical unit. When external tension is applied, these tend to get oriented towards the axis of applied tension. As a result, the physical properties of these materials, such as colour, change.

Setting the transition temperature for example to -18 °C as the maximum freezing temperature or 5 °C as the maximum cooling temperature to a unidirectional memory metal alloy, this may change the applied mechanical tension to a plastic polymer of blue colour. Change of the SMA shape during improper maintenance temperature conditions should stretch the plastic polymer, so that it changes its colour, which becomes white. So, white colour reveals improper maintenance of the product the device (SMA-polymer) is applied. Once the polymer has been distorted beyond its limits, it cannot be restored to its previous state.

### TiO₂

A TiO₂ coating over 100 nm thickness on a material like a memory metal alloy, reflects blue light. Thinning this coating down to 100 nm, its colour turns to red. Stretching of an SMA coated with TiO₂ produces this change in the coating thickness.

Setting the transition temperature for example to -18 °C as the maximum freezing temperature or 5 °C as the maximum cooling temperature to a unidirectional memory metal alloy, this may apply tension to the TiO₂ coating. The change of the SMA shape in conditions of improper maintenance should be such that the tension to the Ti02 coating reduces its thickness to the level of effecting a change of colour (e.g. from blue to red). The red colour indicates faulty maintenance temperatures of the SMA-TiO₂ coating device and, therefore, the product. The unidirectional SMA, once distorted, cannot be restored to its previous state.

Pre-stored SMA forms or the combination of multiple SMAs may be employed to record a full history of temperature shifts.

The proposed method has many advantages over the situation where no specific continuous control of food product maintenance is applied, such as:
- It allows the control of product deterioration due to their exposure to unsuitable temperatures.
- It assures that controlled and appropriate hygiene conditions are continuously maintained during product - food transportation and distribution.
- It has an extremely low cost to be manufactured, particularly in comparison with the cost of the products or food that it is used to assure their quality.
- The aforementioned devices and their parts used in the techniques described for the controlled maintenance of foods - products are not subject to wear due to time. In addition, they do not require any external energy supply, so that there is no functional or time restriction to their application.
- Simple, easy, immediate reading - recognition of the indication of the device which serves simultaneously as a sensor and a recorder, without requiring any special technical knowledge. This makes it suitable to be read by anyone, so that the method will easily and appropriately become popular for widespread use.
- It serves to stand out as a proof of the commitment of the relevant companies to consumers' protection and appropriately reinforcing consumers' confidence.
- It increases the added value of packed products, to the benefit of the production units.

### Case 1. Wire made of unidirectional memory metal alloys.

A wire made of unidirectional memory metal alloys with a specified transition temperature of e.g. -18 °C, is formed in ambient temperature to the shape of a circle (memory shape above the transition temperature). Following this, it is deformed from the cycle shape in a temperature helow -18 °C and packed in a transparent sealed box that has a safety restriction to prevent it from assuming the circle shape when temperature rises above -18 °C. When it is to be used, the box is attached via a sticker or a clip e.g. to a bag of frozen legumes and the safety restriction is removed, so that the free space in the box allows it to regain its shape of a circle if the temperature rises above - 18 °C (the transition temperature). Even if the temperature drops again below -18 °C, the use of the unidirectional memory metal alloy ensures that it will always preserve the shape of the circle.

### Case 2. Wire made of bidirectional memory metal alloys.

In this case, we use a wire made of bidirectional memory metal alloys with a specified transition temperature of e.g. - 18 °C. At ambient temperature it is formed to a linear shape (memory shape above the transition temperature) and, successively, at a temperature below -18 °C it is formed to a horseshoe shape (memory shape below the transition temperature). When in the horseshoe shape, a fiber is attached at the two ends of the horseshoe and the device is put in a sealed transparent box with a safety restriction that does not allow it to unfold to its linear shape at ambient storage temperatures. The box is attached with clips or adhesive sticker to a bag of frozen legumes. The safety restriction band is removed, so that now the alloy may assume its linear shape if the temperature rises above the transition temperature. If this happens, the attached fiber at the horseshoe ends, breaks. If it is refrozen below the transition temperature, the alloy will be reformed to a horseshoe shape, but the broken fiber will demonstrate the violation of the required temperature maintenance levels.

### Case 3. Plate made of unidirectional memory metal alloys.

In this case, we set the transition temperature at e.g. -18 °C, as the maximum of acceptable freezing temperature or 5°C, as the maximum of cooling temperature in a plate of unidirectional memory metal alloys. This plate is folded at temperatures below the transition temperature so that it displays a printed image, e.g. an arrow in a blue circle (like the symbol of the Highway Code). Then, it is packed in a sealed, transparent box with a safety restriction band that does not allow it to unfold. When it is to be used, it is attached with clips or adhesive sticker to a bag of frozen legumes and the safety restriction band is removed. In the case that maintenance temperature inappropriately rises above the transition temperature, it forces the plate to unfold and display another printed symbol, say as in the Highway Code, STOP in a red circle. If the temperature returns to appropriate maintenance levels, the SMA plate does not re-fold. The visual indication shows permanently the faulty maintenance conditions.

### Case 4. Unidirectional SMA with coating of plastic polymer or TiO₂.

A wire is made of unidirectional SMA with coating of plastic polymer or TiO₂ with an appropriate specified transition temperature of e.g. -18 °C, is packed in a sealed transparent box with a safety restriction band. The device is attached with clips or placed inside a bag of frozen legumes. The safety restriction band is removed, so that the available space inside the box is expanded. During inappropriate maintenance above the transition temperature, the SMA elongates and changes the thickness of the plastic polymer or TiO₂ coating. This leads to an obvious colour change. The SMA, being unidirectional, does not resume its previous geometric shape, even if maintenance temperature returns below the transition temperature. The visual indication of the colour, permanently displays the faulty maintenance of the product.

## Claims

1. A method for detecting harmful changes in preservation and freezing temperatures of any kind of product, e.g. such as food, with a specific part inserted into the packaging or incorporated in their bodies, in any possible way, which is based on the use of a memory metal alloy, known as Shape Memory Alloys (SMA), which changes shape, depending on the ambient temperature and is **characterized by** the fact that the SMA has dual function, the same material being used as a sensor for detecting changes in temperature and as a visual indicator of any temperature change outside the desired range limits for preservation or freezing. There is no need for external power source, as it makes use of the energy from the temperature changes of the product.

2. A method for detecting harmful changes in preservation and freezing temperatures of any kind of product, e.g. such as food, with a specific part inserted into the packaging or incorporated in their bodies, in any possible way, which is based on the use of a memory metal alloy, known as Shape Memory Alloys (SMA), which changes shape, depending on the ambient temperature and is **characterized by** the implementation of mechanical intervention of the SMA on plastic polymers, resulting in a change of their color as a visual indication of any temperature change outside the desired range limits for preservation or freezing. There is no need for external power source, as it makes use of the energy from the temperature changes of the product.

3. A method for detecting harmful changes in preservation and freezing temperatures of any kind of product, e.g. such as food, with a specific part inserted into the packaging or incorporated in their bodies, in any possible way, which is based on the use of a memory metal alloy, known as Shape Memory Alloys (SMA), which changes shape, depending on the ambient temperature and is **characterized by** the implementation of mechanical intervention of the SMA on a TiO₂ coating, resulting in changes to the thickness of the coating layer and its color as a visual indication of any temperature change outside the desired range limits for preservation or freezing. There is no need for external power source, as it makes use of the energy from the temperature changes of the product.

4. A method for detecting harmful changes in preservation and freezing temperatures of any kind of product, e.g. such as food, with a specific part inserted into the packaging or incorporated in their bodies, in any possible way, which is based on the use of a memory metal alloy, known as Shape Memory Alloys (SMA), which changes shape, depending on the ambient temperature and is **characterized by** the implementation of mechanical intervention of the SMA on a material resulting in splitting it apart or its ruprure as a visual indication of any temperature change outside the desired range limits for preservation or freezing. There is no need for external power source, as it makes use of the energy from the temperature changes of the product.
